# EUROPEAN PATENT SPECIFICATION

(11) **EP 2 207 648 B1**
(45) Date of publication and mention of the grant of the patent: **06.08.2014**
(21) Application number: 08841727.4
(22) Date of filing: 09.10.2008
(51) Int. Cl.: B25J 18/00, B25J 9/02, B25J 9/04, B25J 9/10

(54) **ROBOT UNIT**
ROBOTEREINHEIT
ROBOT

(30) Priority: 22.10.2007 SE 0702349
(43) Date of publication of application: 21.07.2010
(73) Proprietor: Binar Aktiebolag (publ.), 461 38 Trollhättan (SE)
(72) Inventor: ARNELL, Fredrik, S-293 36 Olofström (SE); JONASSEN, Kjell, S-293 72 Jämshög (SE)
(74) Representative: Johansson, Lars E.
(86) International application number: PCT/SE2008/051154
(87) International publication number: WO 2009/054778

(56) References cited:
- EP-A1- 0 553 717
- EP-A1- 0 888 853
- EP-A1- 1 566 243
- EP-A2- 1 050 361
- WO-A1-01/85404
- WO-A1-2006/045205
- US-A1- 2005 036 879
- US-B1- 7 189 049

## Description

### TECHNICAL FIELD

The present invention relates to a method for rapid transfer of a work object, using a robot unit having a gripping mechanism adapted to carry a gripping unit to hold a work piece, preferably from one workstation to another, the transfer in the horizontal direction being at least one metre and at least partially being effected along an essentially horizontally extending beam unit, and the gripping mechanism being arranged at an end of a vertical beam movably arranged on said horizontally extending beam unit, in such a way that, it can collect and/or deliver a work object in a position situated beyond the end position of the robot unit on said horizontal beam, which robot unit is controlled by means of a control unit and is driven by means of at least one belt member and motors comprising rotor units connected to drive wheels for the said belt member, the said motors being immovably arranged in relation to the said workstations and the transfer of the work object being effected without displacement of the said motors.

### PRIOR ART

Nowadays, various types of robots are commonly used within industry to transfer work pieces from one workstation to another. A typical example is found within pressing lines of the automotive industry, where panels are transferred step by step from one pressing unit to another so as to be successively worked into their final form. The tempo in such a pressing line has risen increasingly over time, with a view to raising productivity. There has long been a general ambition to raise the tempo, i.e. the throughput speed, in such work lines in order to improve profitability. A time-consuming and limiting factor in this is the actual displacement between work units. Contemporary robots are relatively heavy, which means that the maximum transfer speed is limited, since the weight intrinsically produces certain inertia and the energy consumption is proportional to the product of the weight and the transfer speed. Attempts have been made with advanced systems to trim the transfer speeds as much as possible, but it is in principle economically unviable to attempt to reach speeds of more than six to seven meters per second. A primary reason is that contemporary robots are arranged with servo-motors which play a part in the actual movement. Thus the motors themselves, with gears and cable train, add weight to the object of transfer, thereby giving rise to a vicious circle, since a more rapid transfer calls for a stronger and hence heavier motor, gearing and cable train. At the same time, the cost is obviously increased, which also has a limiting effect.

Many applications also involve relatively large transfers, sometimes up to ten meters, which means that the robot unit needs to be moved a long distance along a beam unit. Often it is relatively heavy work pieces, perhaps up to 90 kilos, which are to be transferred. It will be realized, therefore, that the beam unit which is to support the robot unit in the transfer between the one workstation and the other has to meet high requirements and that the cost is proportional to the weight of the robot unit. There are therefore a number of drawbacks which can be attached to the heavy configuration of present-day robots. It is additionally the case with many applications that the robot has to be able to collect/deliver at a point located beyond the end point of the said horizontal beam unit, which places further demands upon the configuration of the robot so as to be capable of performing the transfer with the precision required.

It is previously known to attempt to use "Cartesian type" robots, as they are known, using stationary motors which are not therefore involved in the actual displacement, e.g. as shown in EP 310481 and DE G 9417837.2. None of these known devices demonstrate the facility, however, to use such a robot design to pick in a position beyond the horizontal beam and, above all, they provide no indication of how any flexible picking/collection function might be integrated, in which picking/collection will take place beyond the end points for the said beam unit.

By US 7189049 it has been shown that there are major advantages to be gained if a robot of this kind is used. Owing to the use of a robot principle having the main motors not participating in the movements, speeds of up to and perhaps above ten meters per second can be used, which drastically raises the production capacity in a work line. Moreover, the motors work together, which means that the size (output) of the motors and gears can be reduced compared to a traditional solution having a separate motor for each shaft. However, in some situations there is a need to increase the speed, efficiency even further, above a level that is not possible or to expensive using principles shown in US 7189049.

### BRIEF DESCRIPTION OF THE INVENTION

The object of the present invention is to produce a method and robot system which better fulfils the needs mentioned above, which is achieved by means of a method and system respectively as defined in the independent claims.

Thanks to the solution according to the invention higher speed and/or efficiency is easily obtained. Further better reliability and more flexibility is obtained in comparison with o conventional hard automation, is more flexible than a robot, since a robot according to the principles of the invention may in its preferred form perform all the movements of a traditional multi-axis robot, i.e. side shifting, rotating, tilting, can separate double unattached parts, and can be run as a crossbar transfer unit without the need of an intermediate store i.e. the transfer can be performed in one continuously movement.

Further advantages and aspects of the invention will be evident from the detailed description below.

### DESCRIPTION OF THE FIGURES

The invention will be described in greater detail below with reference to the appended figures, in which:
- Fig. 1: shows a Cartesian robot, arranged with a gripping mechanism according to prior art, installed between two workstations in connection with the collection of a work piece from a workstation,
- Fig. 2: shows the control unit and how this is connected up to a control panel and the motors of a Cartesian robot according to Fig. 1,
- Fig. 3: shows a gripping mechanism according to the invention in a perspective view,
- Fig. 4: shows a gripping mechanism of Fig. 3 in a view from the front,
- Fig. 5: shows a cross-sectional view along V-V in Fig. 3,
- Fig. 6: shows a Cartesian robot arranged with a gripping mechanism of Fig. 3 in a view from the front,
- Fig. 7: shows the Cartesian robot of Fig. 6 in a view from above,
- Fig. 8: shows the Cartesian robot of Fig. 6 in greater detail and in a perspective view,
- Fig. 9-13: shows a pressing line sequence consisting of a Cartesian robot as depicted in Fig. 6-8 arranged with a gripping mechanism according to the invention, as depicted in Fig 3-5.

### DETAILED DESCRIPTION

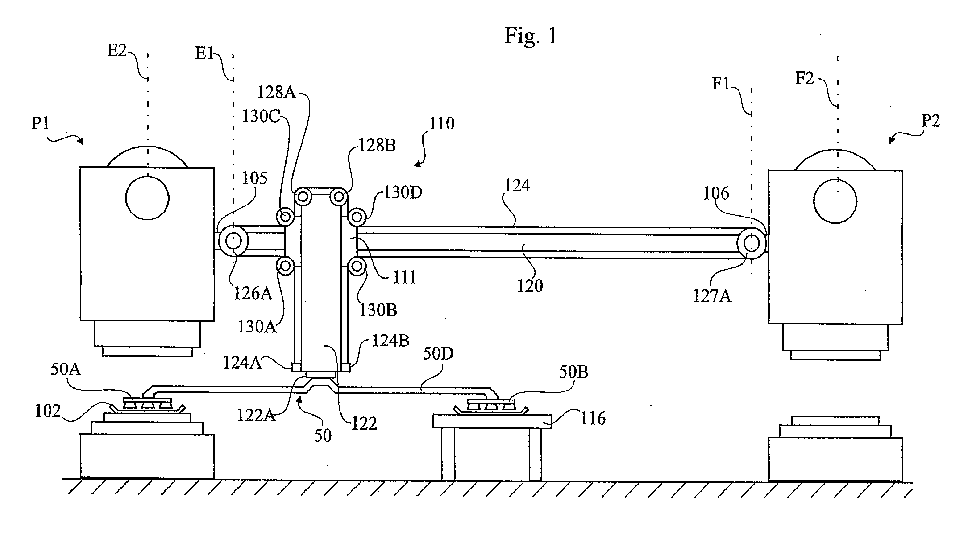

Fig. 1 shows a pressing line having a Cartesian robot 110 for transferring/picking panel pieces 102 from one pressing unit P1 to another P2. The robot 110 is arranged with a gripping mechanism 50 according to prior art comprising an elongated unit 50D, at the ends of which there are arranged two gripping mechanism units 50A, 50B, which can use their one gripping unit 50A to pick a panel 102 from the first press P1 and can use the second gripping unit 50B to place the panel in the second press P2. An intermediate table 116 is used in a known manner for intermediate storage of the panel 102 when switching from the one gripping unit 50A to the other 50B.

The robot comprises a horizontal, fixed column/beam 120, which is fastened to each pressing unit P1, P2 by means of flexible members 105, 106. These flexible fastening members 105, 106 may be essential, for example in a pressing line in order to eliminate powerful vibrations which may arise in a pressing unit. On the beam 120 there is arranged a horizontally moveable slide 111. A vertically movable column/beam 122 is arranged, in turn, on the slide 111. A flexible belt 124 is used to move the slide 111 and the vertical beam 122. The belt 124 is driven by two motors 126, 127 by means of drive wheels 126A, 127BA and runs around two outer belt deflection rollers 128A, B. Thanks to the arrangement the gripping mechanism 50 can collect and/or deliver a work object 102 in a position E2, F2 situated beyond the end position E1, F1 of the said horizontal beam 120.

The belt 124 is fastened by its ends 124A, 124B in the lower end of the vertical column 122. Driving of the motors 126, 127 and hence of the belt 124 allows the gripping mechanism 50 to be moved in all X/Y directions. Through the choice of drive direction and speed of the respective motor, the motion of the gripping mechanism 50 is able to be directed in a controlled manner. If the motors rotate in opposite directions and at the same speed, for example, the gripping mechanism will be displaced only in the vertical direction. If, at the same time, a certain speed differential exists between the motors, then a certain horizontal displacement will be effected between the motors. If, on the other hand, the motors rotate in the same direction and at the same speed, a purely horizontal displacement takes place. Through precise computer control of the rotor units 126C, 127C of the motors, precise transfer patterns, freely in space, can thus easily be obtained.

Owing to the fact that the relative large motors, which are needed for long and fast displacement, are fixed and are not displaced during operation, the weight of the moving parts is made relatively low, allowing increased transfer speeds to be used. This results, in turn, in the capacity in a pressing line being able to be raised. Simultaneous with the increase in capacity, the following advantages are obtained:
- Lower energy consumption
- Lower material cost
- Less maintenance, and
- Greater accessibility

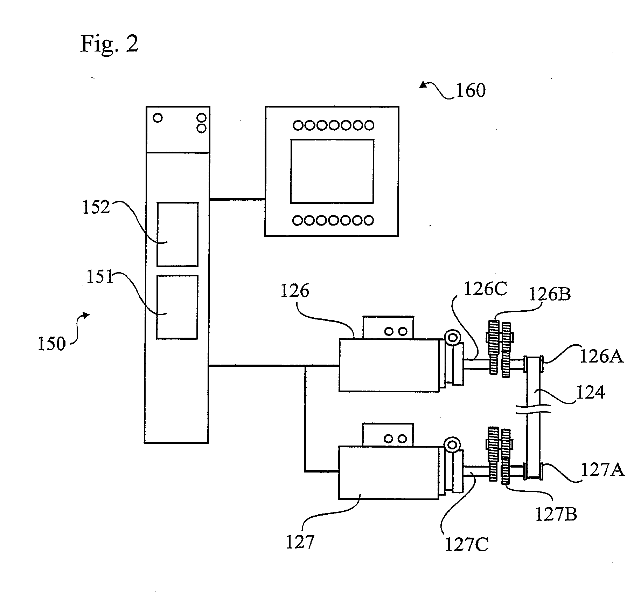

Fig. 2 shows in diagrammatic representation the operator panel 160, a HMI unit (Human Machine Interface) as is known per se. The HMI unit 160 is connected to the control unit 150, which, in turn, controls the motional plan for the robot 110 by means of the two motors 126, 127, which should more accurately be termed servo-motors with associated power electronics, gears 126B, 127B attached to shafts 126C, 127C, and drive belt 124, drive wheel 126A, 127A mounted on said gears 126B, 127B.

The control unit 150 comprises a control computer 151 having a memory unit, a processor unit, etc. The control unit additionally incorporates a registration unit 152, which, inter alia, continuously registers the positions of each rotor of the motors 126, 127, this being effected by means of situation sensors on the respective shaft (rotor). The control computer 151 coordinates the motions of the servo-motors 126, 127, so that the motional pattern of the robot is what the operator learns for a specific motion.

The control computer obtains, via the registration unit 152, continuous information on the situation of the shafts, this information being continuously used by the control computer 151 to control the motors. Apart from controlling the actual motion, the control computer 151 is also used to store data for a variety of motional patterns, for example speeds and positions of the shafts.

The control computer 151 is preferably programmed with special software to be able to drive the load (the panel) very quickly and, at the same time, expose the panel to minimal force stresses (gentle speed changes) through the use of sophisticated control functions, thereby enabling a robot according to the invention to maintain a high production rate between two presses. The servo-motors 126, 127 are the component which brings about the actual motion commanded by the control computer. The servo-motors follow the command (positions) of the control computer very precisely and update their positions (motions) in thousandths of a second. Typical ratings of the servo-motors are ca: 3-10 kW. The operator panel 160, also referred to as the HMI= Human Machine Interface, is preferably used to enable the operator easily to operate the robot and program (teach) it to follow various motional patterns.

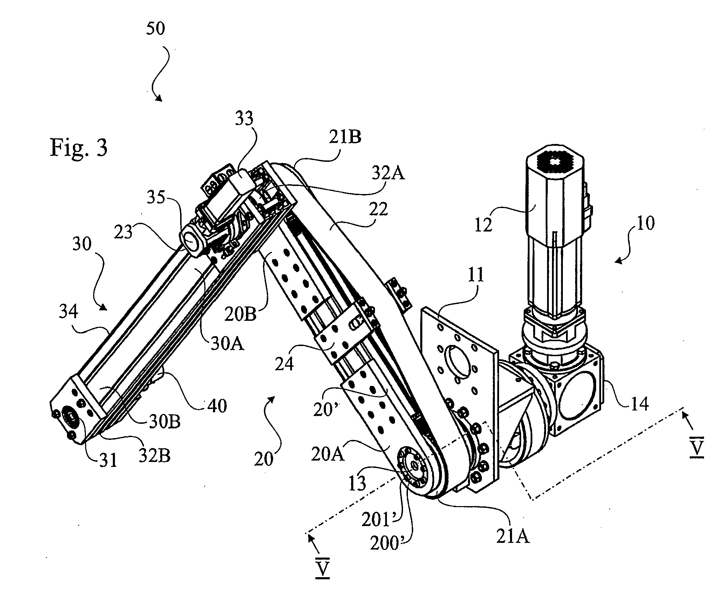

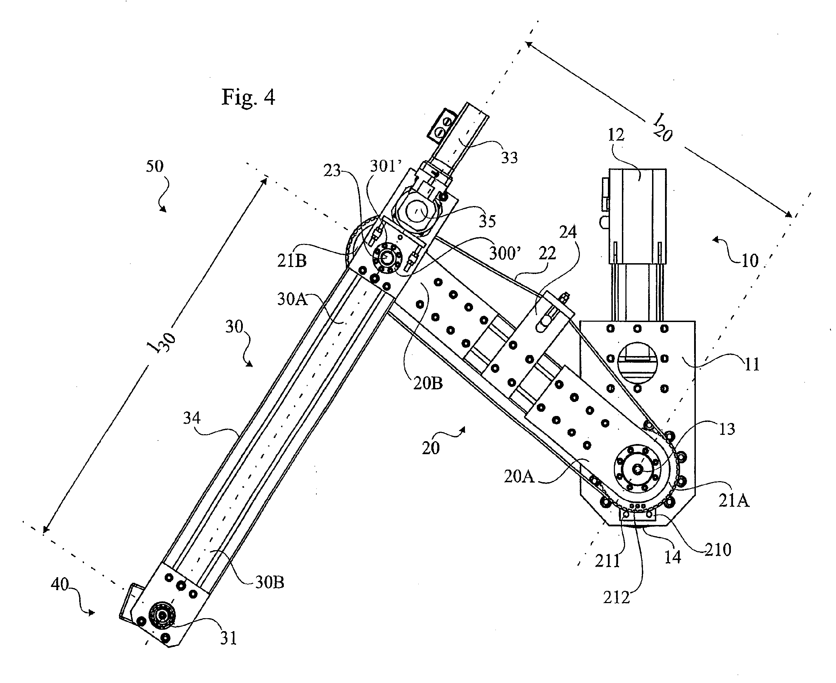

Fig. 3 and Fig. 4 show a gripping mechanism 50 according to the invention, arranged with a consol 11 to be attached to the lower end of the vertical beam 122 of a Cartesian robot 110 (i.e. generally along the principles shown in Fig. 1). A first servo motor 12 attached to a first gearbox 14 (e.g. the motor having a torque of about 20-35 Nm and a rpm of about 1000-2000 and the speed reduction being about 50:1-200:1) mounted on the consol 11 drives a first shaft 13. An inner arm 20 of the gripping mechanism 50 is adjacent its inner end 20A attached to said first shaft 13, i.e. a shaft that is fixedly connected to the outgoing shaft of said first gearbox 14, which is driven by said first servo motor 12. The inner arm 20 is formed by two parallel plate like assemblies 20', 20" (made up of a number of parts not described more in detail herein) which are fixedly attached to the shaft 13 by means of clamping sleeves 200', 200" and their corresponding bolts 201'.

Adjacent its outer end 20B the inner arm 20 is arranged with a second shaft 23, (see Fig. 4) onto which an outer arm 30 is attached. Said second shaft 23 is the outgoing shaft of a drive wheel 21B rotatably fixed within the outer end 20B of inner arm 20, by means of bearings (not shown). The outer arm 30 (having a similar design as the inner arm, not shown in detail) is fixedly attached to said second shaft 23 by means of a second set of clamping sleeves 300', 300" (one set is shown in Fig. 4, also showing the fixing bolts 301').

Adjacent its inner end 30A the outer arm 30 is arranged with a second servo motor 33 attached to a second gearbox 35 (e.g. the motor having a torque of about 1-5 Nm and a rpm of about 100-1000 and the speed reduction being about 30:1-100:1). Adjacent its outer end 30B the said outer arm 30 is arranged with a third shaft 31, onto which a gripping tool interface 40, is attached.

Driven by said first servo motor 12, first gearbox 14 and first shaft 13 the inner arm 20 can be freely positioned in any angel, i.e. controlled by the position of the first shaft 13.

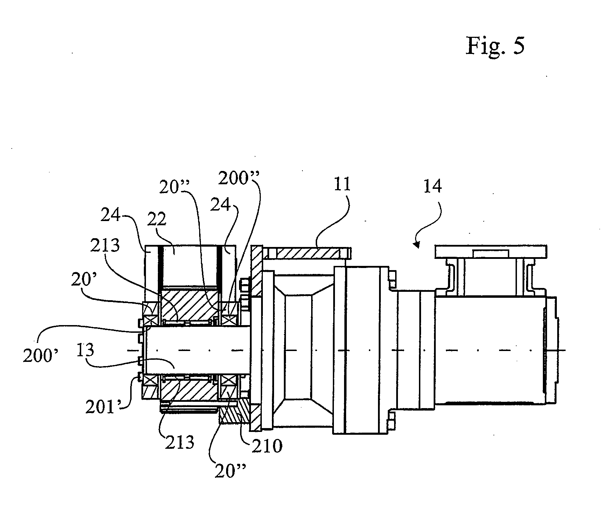

A continuous drive belt 22 is arranged around an inner drive wheel 21A and the outer drive wheel 21B. The inner drive wheel 21A is fixedly attached to the consol 11 by means of an attachment plate 210, which attachment plate 210 is bolted the consol 11 and by having further bolts 212 fixing the drive wheel 21A to the attachment plate 210. Further (see Fig. 5) a bearing 213 (e.g. a needle bearing) is arranged between the shaft 13 and the drive wheel 21A that handles forces (e.g. bending) transferred from the arms 20, 30 to the shaft 13. Accordingly the attachment plate 210 in general merely handles the torque transferred by the belt 22.

The outer arm 30, connected to the movement of the inner arm 20 by means of drive wheel 21A, 21B and drive belt 22, can be freely positioned in any angel round the second shaft 23, but its position is controlled by the position of the inner arm 20, since the inner drive wheel 21A, which is always fixed in relation to the consol 11, will affect the drive belt 22 to change the angle of the outer shaft 23 that in turn positions the outer arm 30. The tension of said drive belt 22 is adjusted by a belt tensioning system 24.

Driven by said second servo motor 33, a second gearbox 35, drive wheels 32A, 32B and drive belt 34 the said gripping tool interface 40 can be freely positioned around said third shaft 31. The movement of the gripping mechanism 50 is programmed into and managed by the control unit 150 according to Fig. 2. Accordingly, the positioning of the inner aim 20 is performed by the force of the first servo motor 12, via the first gearbox 14, whereas the drive wheel 21A, 21B and the drive belt 22, controls the positioning of the outer arm 30 and the independent second servo motor 33 drives/controls the position of the gripping tool interface 40.

Fig. 5 shows a cross-sectional view along line V-V in Fig. 3, i.e. of the arrangement for attaching and driving the inner arm 20. In a schematic manner the gearbox 14 is depicted and it is clearly shown that the gearbox 14 is fixedly attached to the consol 11. From the gearbox 14 they protrudes a drive shaft 13. Onto the drive shaft 13 there is fixed the inner aim 20, which is made up by assemblies of plate like structures, wherein the innermost portion 20' and 20" are shown in Fig. 5. Each arm 20', 20" is fixedly attached to the shaft 13 by means of clamping sleeves 200', 200", known per see, and accordingly the fixing bolts 201' (merely the outer clamping sleeve 200' is described in this respect) has been tightened to clamp each arm 20', 20" securely to the shaft 13. In between the two arms sections 20', 20" there is shown the drive wheel 21A. The drive wheel 21A is fixedly attached to the consol 11, by means of a fixing plate 210 being bolted 211 (see Fig. 4) to the consol 11. In turn the drive wheel 21A is fixed to the fixing plate 210 by means of a further set of bolts 212. Accordingly the drive wheel 21A is none-rotatably arranged in relation to the consol 11. Between the drive wheel 21A and the shaft 13 there is arranged a bearing 213, preferably a needle bearing, to arrange for having the arm 20 rotatable in relation to the drive wheel 21A.

As is evident the movement of the outer arm 30 in relation to the inner arm 20 is dependent on the design of the inner drive wheel 21A in relation to the outer drive wheel 21B. In a preferred embodiment the diameter of the outer periphery is exactly the same and therefore a synchronic movement will be achieved. However the invention does also imply the use of drive wheels of different diameter to facilitate other kind of movements of the interface 40 of the gripping mechanism 50. In the preferred embodiment where the drive wheels 21A, 21B have the same diameter there will be a horizontal movement of the interface 40, from the most extended position on one side to the most extended position on the other side, due to the interaction of the arms 20, 30. Accordingly a very far distance may be achieved that an object may be picked/placed beyond the end positions E1, F1 of the horizontal beam 120. In a preferred embodiment, e.g. using the invention in a transfer line within the car industry, the length of the inner arm is in the range of 500 - 800 mm and of the outer aim in the range of 1000 - 2000 mm, providing a total maximum displacement from one side to the other of more than 5 meters on top of the displacement that is achieved by the horizontal movement of the robot 110 along the beam 120, which in turn indeed might be made very long, e.g. in the interval 3 - 30 meters, preferably 5 - 15 meters.

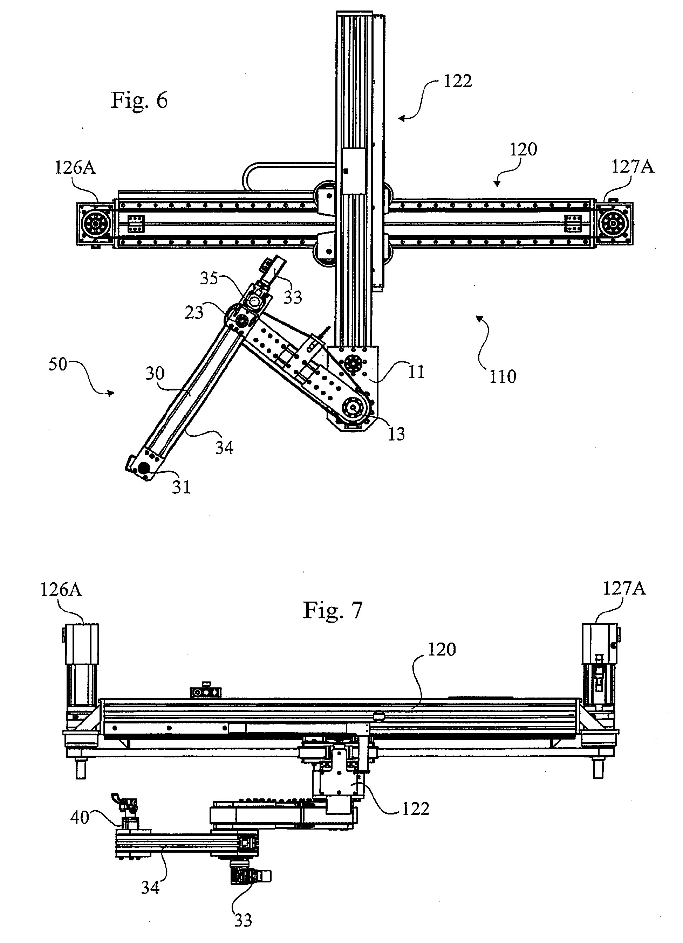

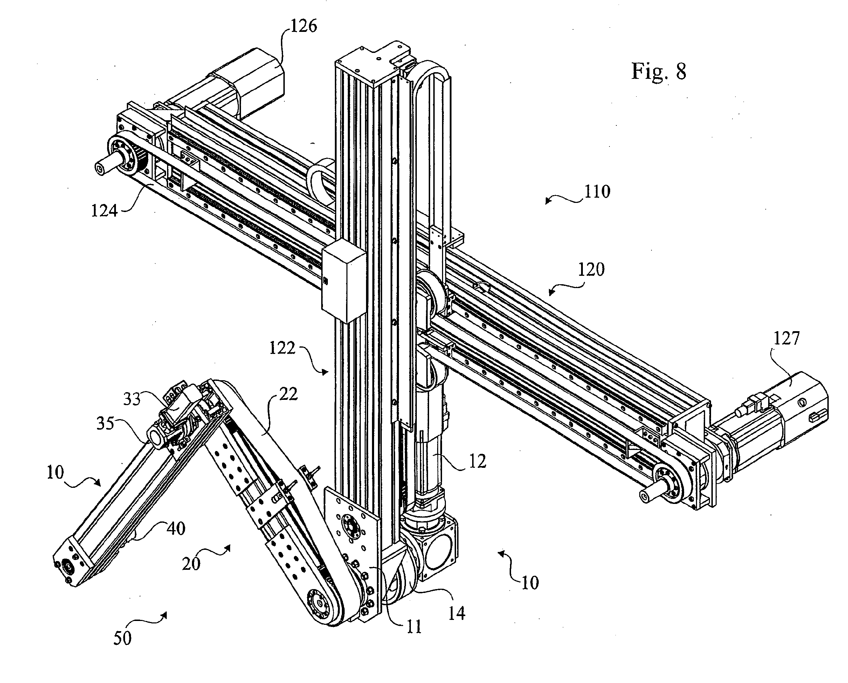

Figs. 6, 7 and 8 show a Cartesian robot 110, along the principles shown in Fig. 1, arranged with a gripping mechanism 50 according to the invention (see Fig. 3-5) in different views. The consol 11 of the gripping mechanism 50 is mounted on the vertical beam 122 of the Cartesian robot 110. The said gripping mechanism 50, with its gripping tool interface 40, can be moved and positioned horizontally along the beam 120 and vertically along the beam 122. The simultaneously movement of said gripping mechanism 50 and said Cartesian robot 110 is programmed into and managed by a control unit 150 (see Fig. 2).

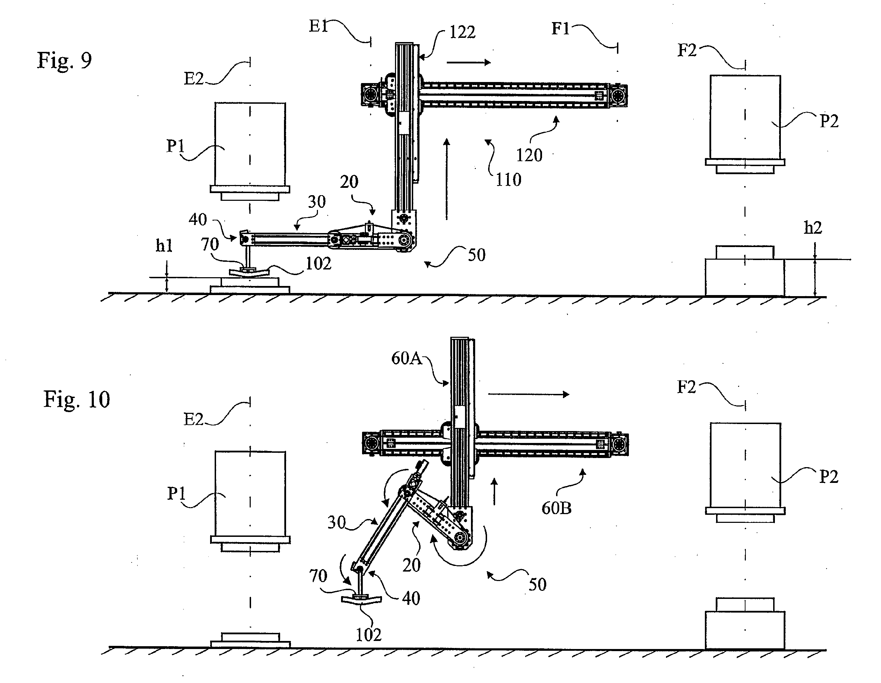

Fig. 9-13 show a pressing line sequence having a Cartesian robot 110, as depicted above, equipped with a gripping mechanism 50 and a gripping unit 70 according to the invention, for transferring/picking panel pieces 102 from one pressing unit P1 to another P2. The gripping mechanism 50 is attached to the vertical beam 122 on the said Cartesian robot 110 shown in Fig. 6.

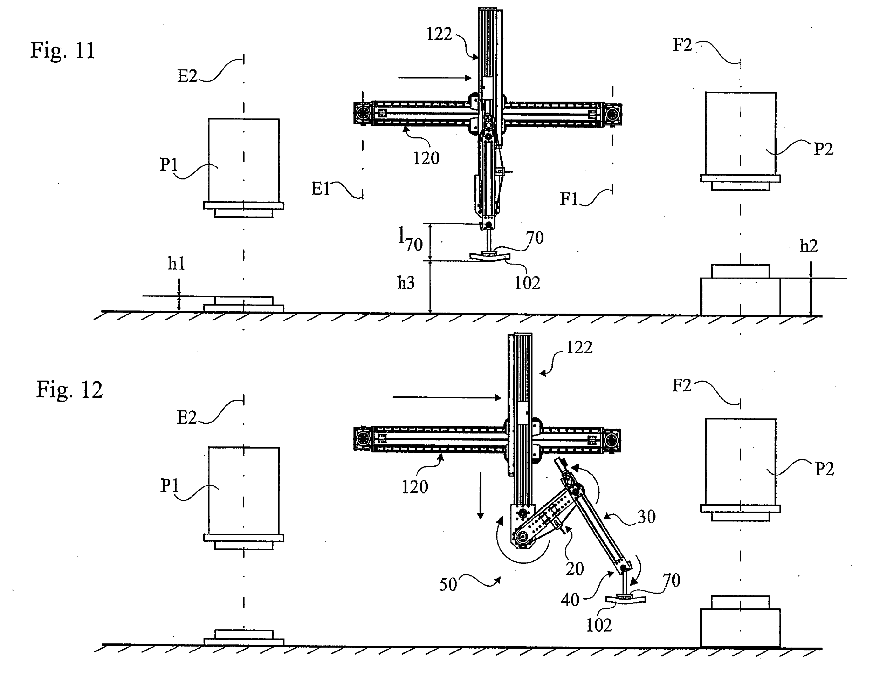

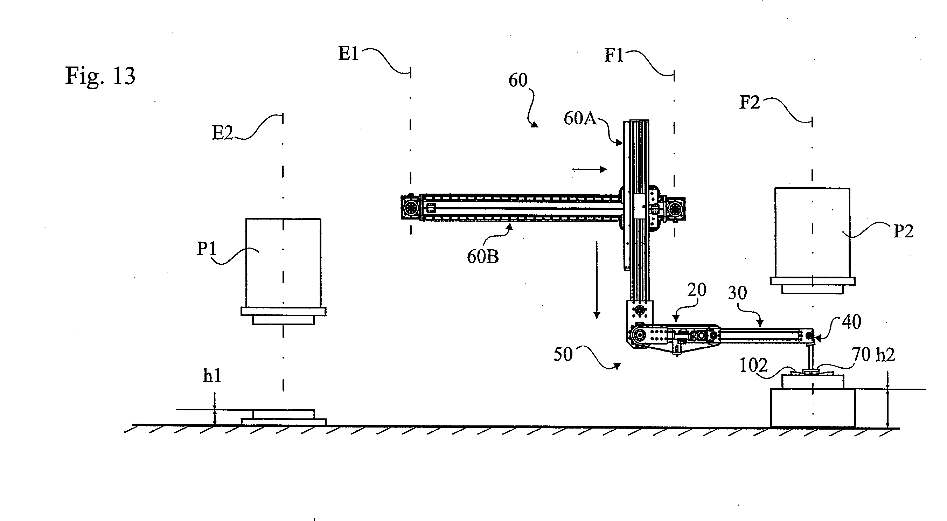

The robot 110 with the gripping mechanism 50 comprising the gripping unit 70 attached to gripping tool interface 40 picks a panel piece 102 from the first pressing unit P1 (see Fig. 9). First the gripping mechanism is moved into the gripping position, which is performed by simultaneously controlling drive motors 126, 127 to move the lower end of the vertical beam 122 into its pre-programmed position and the first and second drive motors 12, 33 to move the gripping unit 70 to its pre-programmed position as shown in Fig. 9. Thereafter as shown in Fig. 10 the panel piece 102 is lifted by the gripping unit 70 and by simultaneous control of drive by motors 126, 127, 12, 33 it is moved upwards along the pre-programmed path, i.e. vertically along beam 122, horizontally along beam 122 with a simultaneously contraction of inner and outer arms 20, 30 of the gripping mechanism 50 and possibly activation of motor 33 to turn/tilt or lift the object 102. In the preferred embodiment the two belt drive wheels 21A, 21B have the same diameter and accordingly their movements will be synchronous, i.e. to make the interface 40 move in a horizontal plane (when the robot is standing still and motor 12 is activated) As can be seen in Fig. 11, in an intermediate position along a transfer, the inner and outer arms 20, 30 will be in parallel with the vertical beam 122. Thereafter as shown in Fig. 12 the panel piece 102, held by said gripping unit 70 will be moved along beam 120, downwards along vertically beam 122 with a simultaneously extraction of inner and outer arm 20, 30 of said gripping mechanism 50. Finally, as shown in Fig. 13, the gripping mechanism 50 with gripping unit 70 and panel piece 102, is moved into a placing position, i.e. by means of a movement horizontally along beam 120, downwards along vertical beam 122, outwards by having the inner and outer aim 20, 30 extended and in a position in parallel with the horizontal beam 120, to place the object 102 a far distance away from the end position F1 of the said horizontal beam 120, i.e. in position F2 situated corresponding to the second pressing unit P2 through a release of said gripping unit 70. Accordingly the novel gripping mechanism 50 provides the possibility to pick/place an object a distance l₂₀+l₃₀+l₇₀ away from the end positions E1, F2.

The transfer of the panel pieces 102 from pressing unit P1 to P2 is characterized by a fast and smooth movement, which is based on unique algorithms for path planning programmed into and managed by the press handling equipment according to Fig. 2, the ability to reach a panel piece 102 in pressing units P1, P2 situated in a positions E2, F2 beyond the end points of the robot E1, F1, and performed in one continuously movement with no need for an intermediate reload of the panel piece 102.

A pressing line consisting of a Cartesian robot equipped with a gripping mechanism according to the invention gains:
- Speed and reliability of conventional hard automation.
- Flexibility, all movements of a robot, side shifting, rotating, tilting, and the ability to separate double unattached parts.
- Can run as a cross transfer unit with the tooling from the transfer press with economically benefit regarding spare parts, maintenance and user-friendliness.
- Transfer in one continuously movement with no need for intermediate reload.
- Fast and smooth movements allow a higher speed of motion and an increased production rate.

The invention is not limited to what has been illustrated above but can be varied within the scope of the following patent claims. It will therefore be realized, inter alia, that many different forms of solutions can be used to arrange the slide in a sliding manner on the beam and e.g. to arrange the beam unit such that it is slidable inside the slide. Instead of that which has been illustrated, a multiplicity of guide wheels can be used, for example arranged between all surfaces with relative motion in relation to one another, as well as needle ball bearings, etc. Guide systems without the use of guide wheels are also possible, preferably through the use of low-friction material, PTFE type, for configuration of the sliding surfaces, expediently in the form of low-friction material in contact with a metal surface offering high abrasion resistance. Guide pins and guide bushings interacting with guide grooves also represent conceivable solutions which are within the scope of the options of the person skilled in the art. It will further be realized that the number of devices which has been described and illustrated is by no means limiting. It will therefore be realized, for example, that the speed reduction in the gear boxes 14 may vary drastically depending on different combinations/needs. It will further be realized that the invention can be used with many types of gripping units, e.g. suction heads, gripping claws, electromagnets, etc. Further it is evident that the principle according to the invention may be used in connection with much bigger and indeed also smaller arrangements than described above. Moreover, it is evident that the principle is also applicable in connection with turning the robot the other way around, i.e. attaching the gripping mechanism at the to of the vertical beam, and/or positioning the "horizontal beam" in any plane not being horizontal, to be able to transfer object in any desired trajectory.

## Claims

1. Method for rapid transfer of a work object, using a robot unit (110) having a gripping mechanism (50) adapted to carry a gripping unit (70) to hold a work piece (102), preferably from one workstation (P1) to another (P2), the transfer in the horizontal direction being at least one metre and at least partially being effected along an essentially horizontally extending beam unit (120), and the gripping mechanism (50) being arranged at an end of a vertical beam (122) movably arranged on said horizontally extending beam unit (120), in such a way that, it can collect and/or deliver a work object (102) in a position (E2, F2) situated beyond the end position (E1, F1) of the robot unit (110) on said horizontal beam (120), which robot unit is controlled by means of a control unit (150) and is driven by means of at least one first flexible belt member (124) and motors (126, 127) comprising rotor units connected to drive wheels (126A, 127A) for the said belt member (124), the said motors (126, 127) being immovably arranged in relation to the said workstations (P1, P2) and the transfer of the work object (102) being effected without displacement of the said motors (126, 127), **characterised in that** the gripping mechanism (50) includes an arrangement of pivoting arms (20, 30) interconnected to facilitate said gripping unit to collect and/or deliver a work object in a position (E2, F2) situated beyond said end position (E1, F1), and by using a second drive belt (22) to control the movement/position of a second arm (30) being pivotally connected to a first arm (20).

2. Method according to claim 1, **characterised in that** the degree of synchronisation in the position of the first arm (20) in relation to the second arm (30) is achieved by the dimensional relationship between a first belt drive wheel (21A) fixedly attached in relation to the vertical beam (122) and a second belt drive wheel (21B) fixedly attached to the pivoting axis/shaft (23) of said second arm (30).

3. Method according to any preceding claim, **characterised** i n that said pivoting arms (20, 30) are arranged to displace an interface (40) for the gripping unit (70) in a plane that is parallel to said horizontal beam (120) when said vertical beam (122) is kept at the same level in relation to the horizontal beam (120).

4. Method according to any preceding claims, **characterised in that** said gripping mechanism (50) includes a first drive motor (12) arranged to control movement/position of the first arm (20), which first drive motor (12) is fixed attached in relation to the vertical beam (122) and second drive motor (33) arranged to control the movement/position of the interface (40) for the gripping tool (70), which second drive motor (33) is attached to said second arm (30).

5. Method according to claim 4, **characterised in that** the first drive motor (12) of the gripping unit (50) is substantially more powerful than said second drive motor (33) and preferably that the main motors (126, 127) are more powerful than said first drive motor (12).

6. System for rapid transfer of a work object, comprising a robot unit (110) having a gripping mechanism (50) adapted to carry a gripping unit (70) to hold a work piece (102), preferably from one workstation (P1) to another (P2), an essentially horizontally extending beam unit (120) at least one metre for the transfer in the horizontal direction, the gripping mechanism (50) being arranged at an end of a vertical beam (122) movably arranged on said horizontally extending beam unit (120), arranged such that it can collect and/or deliver a work object (102) in a position (E2, F2) situated beyond the end position (E1, F1) of the robot unit (110) on said horizontal beam (120) a control unit (150) arranged to control said robot unit (110), at least one first flexible belt member (124) to drive said vertical beam (122) in both the horizontal and vertical direction and motors (126, 127) comprising rotor units connected to drive wheels (126A, 127A) arranged to drive said first belt member (124), wherein said motors (126, 127) are immovably arranged in relation to the said workstations (P1, P2) and the transfer of the work object (102) is effected without displacement of the said motors (126, 127), **characterised in that** the gripping mechanism (50) includes an arrangement of pivoting arms (20, 30) interconnected to facilitate said gripping unit (70) to collect and/or deliver a work object in a position (E2, F2) situated beyond said end position (E1, F1), and by a second drive belt (22) arranged to control the movement/position of a second arm (30) being pivotally connected to a first arm (20).

7. System according to claim 6, **characterised by** a first belt drive wheel (21 A) fixedly attached in relation to the vertical beam (122) and a second belt drive wheel (21B) fixedly attached to the pivoting axis/shaft (23) of said second arm (30).

8. System according to any of claims 6-7, **characterised in that** said first pivoting arms (20) is longer than said second pivoting arm (30).

9. System according to any of claims 6-8, **characterised by** a first drive motor (12) arranged to control movement/position of the first arm (20), which first drive motor (12) is fixed attached in relation to the vertical beam (122) and second drive motor (33) arranged to control the movement/position of the interface (40) for the gripping tool (70), which second drive motor (33) is attached to said second arm (30).

10. System according to claim 9, **characterised in that** the first drive motor (12) of the gripping unit (50) is substantially more powerful than said second drive motor (33) and preferably that the main motors (126, 127) are more powerful than said first drive motor (12).

## Patentansprüche

1. Verfahren für einen schnellen Transport eines Arbeitsgegenstandes, unter Verwendung einer Robotereinheit (110) mit einem Greifmechanismus (50), der angepasst ist, eine Greifeinheit (70) zu tragen, um ein Werkstück (102) zu halten, vorzugsweise von einer Arbeitsstation (P1) zu einer weiteren Arbeitsstation (P2), wobei der Transport in der horizontalen Richtung mindestens einen Meter beträgt und mindestens teilweise entlang einer sich im Wesentlichen horizontal erstreckenden Balkeneinheit (120) ausgeführt wird, und
wobei der Greifmechanismus (50) an einem Ende eines vertikalen Balkens (122) auf der sich horizontal erstreckenden Balkeneinheit (120) in einer Weise beweglich angeordnet ist, so dass er einen Arbeitsgegenstand (102) in einer Position (E2, F2) aufnehmen und/oder abgeben kann, die außerhalb der Endposition (E1, F1) der Robotereinheit (110) auf dem horizontalen Balken (120) liegt,
wobei die Robotereinheit mittels einer Steuereinheit (150) gesteuert wird und mittels mindestens eines ersten flexiblen Riemenelements (124) und Motoren (126, 127) angetrieben wird, die Rotoreinheiten umfassen, die mit Antriebsrädern (126A, 127A) für das Riemenelement (124) verbunden sind,
wobei die Motoren (126, 127) in Bezug auf die Arbeitsstationen (P1, P2) unbeweglich angeordnet sind und der Transport des Arbeitsgegenstands (102) ohne eine Versetzung der Motoren (126, 127) ausgeführt wird,
**gekennzeichnet**
**dadurch, dass** der Greifmechanismus (50) eine Anordnung von Schwenkarmen (20, 30) einschließt, die miteinander verbunden sind, um es der Greifeinheit zu ermöglichen, einen Arbeitsgegenstand in einer Position (E2, F2) aufzunehmen und/oder abzugeben, die außerhalb der Endposition (E1, F1) liegt, und
durch die Verwendung eines zweiten Antriebsriemens (22), um die Bewegung / Position eines zweiten Arms (30) zu steuern, der schwenkbar mit einem ersten Arm (20) verbunden ist.

2. Verfahren gemäß Anspruch 1, **dadurch gekennzeichnet, dass** der Grad der Synchronisation in der Position des ersten Arms (20) in Bezug auf den zweiten Arm (30) erreicht wird durch die Beziehung der Abmessungen zwischen einem ersten Riemenantriebsrad (21A), das in Bezug auf den vertikalen Balken (122) fest angebracht ist, und einem zweiten Riemenantriebsrad (21B), das an der Schwenkachse/Welle (23) des zweiten Arms (30) fest angebracht ist.

3. Verfahren gemäß einem der vorstehenden Ansprüche, **dadurch gekennzeichnet, dass** die Schwenkarme (20, 30) angeordnet sind, um eine Schnittstelle (40) für die Greifeinheit (70) in einer Ebene zu versetzen, die parallel zu dem horizontalen Balken (120) ist, wenn der vertikale Balken (122) in Bezug auf den horizontalen Balken (120) auf der gleichen Höhe gehalten wird.

4. Verfahren gemäß einem der vorstehenden Ansprüche, **dadurch gekennzeichnet, dass** der Greifmechanismus (50) einen ersten Antriebsmotor (12) einschließt, der eingerichtet ist, eine Bewegung/Position des ersten Arms (20) zu steuern, wobei der erste Antriebsmotor (12) in Bezug auf den vertikalen Balken (122) fest angebracht ist, und einen zweiten Antriebsmotor (33) einschließt, der eingerichtet ist, um die Bewegung/Position der Schnittstelle (40) für das Greifwerkzeug (70) zu steuern, wobei der zweite Antriebsmotor (33) an dem zweiten Arm (30) angebracht ist.

5. Verfahren gemäß Anspruch 4, **dadurch gekennzeichnet, dass** der erste Antriebsmotor (12) der Greifeinheit (50) wesentlich stärker ist als der zweite Antriebsmotor (33) und dass bevorzugt die Hauptmotoren (126, 127) stärker als der erste Antriebsmotor (12) sind.

6. System für einen schnellen Transport eines Arbeitsgegenstandes, umfassend eine Robotereinheit (110) mit einem Greifmechanismus (50), der angepasst ist, eine Greifeinheit (70) zu tragen, um ein Werkstück (102) zu halten, vorzugsweise von einer Arbeitsstation (P1) zu einer weiteren Arbeitsstation (P2),
eine, sich im Wesentlichen horizontal erstreckende Balkeneinheit (120) von mindestens einem Meter, für den Transport in der horizontalen Richtung,
wobei der Greifmechanismus (50) an einem Ende eines vertikalen Balkens (122) angeordnet ist, der auf der sich horizontal erstreckenden Balkeneinheit (120) beweglich angeordnet ist, und der so eingerichtet ist, dass er einen Arbeitsgegenstand (102) in einer Position (E2, F2) aufnehmen und/oder abgeben kann, die außerhalb der Endposition (E1, F1) der Robotereinheit (110) auf dem horizontalen Balken (120) liegt,
eine Steuereinheit (150), die eingerichtet ist, die Robotereinheit (110) zu steuern, mindestens ein erstes flexibles Riemenelement (124), um den vertikalen Balken (122) sowohl in der horizontalen Richtung als auch in der vertikalen Richtung anzutreiben, und
Motoren (126, 127), die Rotoreinheiten umfassen, die mit Antriebsrädern (126A, 127A) verbunden sind, eingerichtet, um das erste Riemenelement (124) anzutreiben, wobei die Motoren (126, 127) in Bezug auf die Arbeitsstationen (P1, P2) unbeweglich angeordnet sind, und wobei der Transport des Arbeitsgegenstands (102) ohne eine Versetzung der Motoren (126, 127) ausgeführt wird,
**gekennzeichnet**
**dadurch, dass** der Greifmechanismus (50) eine Anordnung von Schwenkarmen (20, 30) einschließt, die miteinander verbunden sind, um es der Greifeinheit (70) zu ermöglichen, einen Arbeitsgegenstand in einer Position (E2, F2) aufzunehmen und/oder abzugeben, die außerhalb der Endposition (E1, F1) liegt, und
durch einen zweiten Antriebsriemen (22), der eingerichtet ist, um die Bewegung/Position eines zweiten Arms (30) zu steuern, der mit einem ersten Arm (20) schwenkbar verbunden ist.

7. System gemäß Anspruch 6, **gekennzeichnet durch** ein erstes Riemenantriebsrad (21A), das in Bezug auf den vertikalen Balken (122) fest angebracht ist, und **durch** ein zweites Riemenantriebsrad (21B), das an der Schwenkachse/Welle (23) des zweiten Arms (30) fest angebracht ist.

8. System gemäß einem der Ansprüche 6-7, **dadurch gekennzeichnet, dass** der erste Schwenkarm (20) länger als der zweite Schwenkarm (30) ist.

9. System gemäß einem der Ansprüche 6-8, **gekennzeichnet durch** einen ersten Antriebsmotor (12), der eingerichtet ist, eine Bewegung/Position des ersten Arms (20) zu steuern, wobei der erste Antriebsmotor (12) in Bezug auf den vertikalen Balken (122) fest angebracht ist, und **durch** einen zweiten Antriebsmotor (33), der eingerichtet ist, um die Bewegung/Position der Schnittstelle (40) für das Greifwerkzeug (70) zu steuern, wobei der zweite Antriebsmotor (33) an dem zweiten Arm (30) angebracht ist.

10. System gemäß Anspruch 9, **dadurch gekennzeichnet, dass** der erste Antriebsmotor (12) der Greifeinheit (50) wesentlich stärker ist als der zweite Antriebsmotor (33) und dass bevorzugt die Hauptmotoren (126, 127) stärker als der erste Antriebsmotor (12) sind.

## Revendications

1. Procédé pour le transfert rapide d'un objet à travailler, utilisant une unité formant robot (110) ayant un mécanisme de préhension (50) adapté pour porter une unité de préhension (70) pour maintenir une pièce à travailler (102), de préférence d'une station de travail (P1) à une autre (P2), le transfert dans la direction horizontale étant d'au moins un mètre et étant effectué au moins en partie le long d'une unité formant poutre (120) s'étendant sensiblement horizontalement, et le mécanisme de préhension (50) étant disposé à une extrémité d'une poutre verticale (122) disposée de façon mobile sur ladite unité formant poutre (120) s'étendant horizontalement, de manière à ce qu'il puisse collecter et/ou délivrer un objet à travailler (102) dans une position (E2, F2) située au-delà de la position d'extrémité (E1, F1) de l'unité formant robot (110) sur ladite poutre horizontale (120), laquelle unité formant robot est commandée au moyen d'une unité de commande (150) et est entraînée au moyen d'au moins un premier élément flexible formant courroie (124) et de moteurs (126, 127) comprenant des unités formant rotor connectées à des roues d'entraînement (126A, 127A) pour ledit élément formant courroie (124), lesdits moteurs (126, 127) étant disposés de façon immobile par rapport auxdits postes de travail (P1, P2) et le transfert de l'objet à travailler (102) étant effectué sans déplacement desdits moteurs (126, 127), **caractérisé en ce que** le mécanisme de préhension (50) comprend un agencement de bras pivotants (20, 30) qui sont interconnectés de manière à faciliter la collecte et / ou la délivrance par ladite unité de préhension d'un objet à travailler dans une position (E2, F2) située au-delà de ladite position d'extrémité (E1, F1), et en utilisant une deuxième courroie d'entraînement (22) pour commander le déplacement / la position d'un deuxième bras (30) qui est relié de façon pivotante à un premier bras (20).

2. Procédé selon la revendication 1, **caractérisé en ce que** le degré de synchronisation dans la position du premier bras (20) par rapport au deuxième bras (30) est obtenu par la relation dimensionnelle entre une première roue d'entraînement formant courroie (21A) montée de façon fixe par rapport à la poutre verticale (122) et une deuxième roue d'entraînement formant courroie (21B) montée de façon fixe par rapport à l'axe/l'arbre (23) de pivotement dudit deuxième bras (30).

3. Procédé selon l'une quelconque des revendications précédentes, **caractérisé en ce que** lesdits bras pivotants (20, 30) sont agencés pour déplacer une interface (40) pour l'unité de préhension (70) dans un plan qui est parallèle à ladite poutre horizontale (120) lorsque ladite poutre verticale (122) est maintenue au même niveau par rapport à la poutre horizontale (120).

4. Procédé selon l'une quelconque des revendications précédentes, **caractérisé en ce que** ledit mécanisme de préhension (50) comprend un premier moteur d'entraînement (12) agencé pour commander le déplacement / la position du premier bras (20), lequel premier moteur d'entraînement (12) est monté de manière fixe par rapport à la poutre verticale (122) et le deuxième moteur d'entraînement (33) est agencé pour commander le déplacement / la position de l'interface (40) pour l'outil de préhension (70), lequel deuxième moteur d'entraînement (33) est fixé audit deuxième bras (30).

5. Procédé selon la revendication 4, **caractérisé en ce que** le premier moteur d'entraînement (12) de l'unité de préhension (50) est sensiblement plus puissant que ledit deuxième moteur d'entraînement (33), et de préférence **en ce que** les moteurs principaux (126, 127) sont plus puissants que ledit premier moteur d'entraînement (12).

6. Système pour le transfert rapide d'un objet à travailler, comprenant une unité formant robot (110) ayant un mécanisme de préhension (50) adapté pour transporter une unité de préhension (70) afin de maintenir une pièce à travailler (102), de préférence d'une station de travail (P1) à une autre (P2), une unité formant poutre (120) s'étendant sensiblement horizontalement, d'au moins un mètre, pour le transfert dans la direction horizontale, le mécanisme de préhension (50) étant agencé à une extrémité d'une poutre verticale (122) agencée de façon mobile sur ladite unité formant poutre (120) s'étendant horizontalement, en étant agencé de telle sorte qu'il puisse collecter et / ou délivrer un objet à travailler (102) en une position (E2, F2) située au-delà de la position d'extrémité (E1, F1) de l'unité formant robot (110) sur ladite poutre horizontale (120), une unité de commande (150) étant agencée pour commander ladite unité formant robot (110), au moins un premier élément flexible (124) formant courroie, pour entraîner ladite poutre verticale (122) à la fois dans la direction horizontale et verticale, et des moteurs (126, 127) comprenant des unités formant rotor connectés à des roues d'entraînement (126A, 127A) agencées pour entraîner ledit premier élément formant courroie (124), lesdits moteurs (126, 127) étant disposés de manière fixe par rapport auxdits postes de travail (P1, P2), et le transfert de l'objet à travailler (102) s'effectuant sans déplacement desdits moteurs (126, 127), **caractérisé en ce que** le mécanisme de préhension (50) comprend un agencement de bras pivotants (20, 30) interconnectés afin de faciliter la collecte et / ou la délivrance, par l'unité de préhension (70), d'un objet à travailler dans une position (E2, F2) située au-delà de ladite position d'extrémité (E1, F1), et par une deuxième courroie d'entraînement (22) agencée pour commander le déplacement / la position d'un deuxième bras (30) relié de façon pivotante à un premier bras (20).

7. Système selon la revendication 6, **caractérisé par** une première roue d'entraînement (21A) formant courroie, montée de manière fixe par rapport à la poutre verticale (122) et une deuxième roue d'entraînement (21B) formant courroie montée de manière fixe par rapport à l'axe / l'arbre (23) de pivotement dudit second bras (30).

8. Système selon l'une quelconque des revendications 6 ou 7, **caractérisé en ce que** ledit premier bras de pivotement (20) est plus long que ledit deuxième bras pivotant (30).

9. Système selon l'une quelconque des revendications 6 à 8, **caractérisé par** un premier moteur d'entraînement (12) agencé pour commander le déplacement / la position du premier bras (20), lequel un premier moteur d'entraînement (12) est assemblé de façon fixe par rapport à la poutre verticale (122), et un deuxième moteur d'entraînement (33) est agencé pour commander le déplacement / la position de l'interface (40) pour l'outil de préhension (70), lequel deuxième moteur d'entraînement (33) est fixé audit deuxième bras (30).

10. Système selon la revendication 9, **caractérisé en ce que** le premier moteur d'entraînement (12) de l'unité de préhension (50) est sensiblement plus puissant que ledit deuxième moteur d'entraînement (33), et de préférence **en ce que** les moteurs principaux (126, 127) sont plus puissants que ledit premier moteur d'entraînement (12).
